# FASCICULE DE BREVET EUROPEEN

(11) **EP 1 530 535 B1**
(45) Date de publication et mention de la délivrance du brevet: **08.10.2008**
(21) Numéro de dépôt: 03758252.5
(22) Date de dépôt: 20.08.2003
(51) Int. Cl.: B62D 1/00

(54) **PROCEDE ET SYSTEME DE REGULATION D'UN REGIME RALENTI D'UN MOTEUR D'UN VEHICULE EQUIPE D'UNE DIRECTION ASSISTEE**
VERFAHREN UND SYSTEM ZUR LEERLAUFREGELUNG EINES MOTORS EINES MIT EINER SERVOLENKUNG AUSGERÜSTETEN FAHRZEUGS
METHOD AND SYSTEM FOR REGULATING THE IDLE SPEED OF THE ENGINE OF A POWER STEERING-EQUIPPED VEHICLE

(30) Priorité: 23.08.2002 FR 0210545
(43) Date de publication de la demande: 18.05.2005
(73) Titulaire: RENAULT S.A.S., 92100 Boulogne Billancourt (FR)
(72) Inventeur: CALEGARI, Lionel, F-78990 Elancourt (FR); CEZARD-SIBILLOT, Frédéric, F-91700 Sainte Geneviève des Bois (FR); CUNY, Pierre-Yves, F-91330 Yerres (FR); PAILLISSE, Rémi, F-75013 Paris (FR); SOUFFLET, Didier, F-78990 Elancourt (FR)
(86) Numéro de dépôt international: PCT/FR2003/002552
(87) Numéro de publication internationale: WO 2004/018280

(56) Documents cités:
- DE-A- 10 055 738
- FR-A- 2 806 127

## Description

La présente invention concerne les véhicules motorisés pourvus d'une direction assistée.

Dans le cas d'un véhicule équipé d'un moteur thermique lors d'un fonctionnement en régime de ralenti, la régulation du moteur thermique peut être fortement perturbées lors de l'utilisation de la direction assistée. En effet, l'énergie consommé par la direction assistée augmente la charge du moteur thermique et fait chuter le régime de ce dernier: Cette baisse du régime a plusieurs conséquences :
- une diminution de la vitesse de la pompe de direction assistée, dans le cas d'une direction assistée hydraulique, ce qui a pour effet de réduire le biveau d'assistance,
- une génération possible de bruits par la boite de vitesses liés à un régime trop faible du moteur thermique,
- l'arrêt ou calage éventuel du moteur thermique lié à une chute trop important de sa vitesse de rotation provoquée par les sollicitations de la direction assistée.

De façon classique, on informe un calculateur de contrôle du moteur de la direction assistée hydraulique afin qu'il régule le régime en tenant compte de la charge supplémentaire. Pour cela, un pressostat est placé sur le tuyau haute pression du circuit hydraulique de direction assistée afin de rendre compte de l'augmentation de pression relative, cette information permettant de gérer cette variation transitoire de la charge résistante.

La publication. FR 2806127 décrit et représente un procédé de régulation d'un moteur thermique tenant compte de l'assistance de direction et dépourvu de pressostat Ce procédé comprend une étape de génération d'un signal de consommation d'énergie par le moyens d'assistance de direction à partir d'un signal provenant d'un capteur angulaire du mécanisme de direction, afin d'accroître le régime du moteur thermique.

Cette solution, qui permet de s'affranchir des différentes contraintes associées à l'utilisation d'un pressostat, présente toutefois quelques insuffisances. Quelle que soit la zone de détection de l'angle volant, l'application reste la même et ne permet pas ainsi une prestation identique au traitement réalisé par un pressostat. De plus, aucune transition entre un mode roulant, à faible vitesse, et un mode arrêté n'est pris en compte.

Un des objectifs de l'invention est donc de proposer un procédé de régulation, et un système correspondant, qui permette de s'affranchir de ses contraintes et qui de plus, en réponse à des objectifs que l'on retrouve invariablement chez les différents constructeurs automobiles, soit peu coûteux.

Ainsi, l'invention propose un procédé de régulation d'un moteur thermique de véhicule en régime ralenti, ledit véhicule étant pourvu d'un moyen d'assistance du mécanisme de direction, dans le quel on génère un signal de consommation d'énergie par le moyen d'assistance de direction à partir d'un signal provenant d'un capteur angulaire du mécanisme de direction, pour accroître l'alimentation du moteur thermique.

Ce dispositif est caractérisé en ce que la plage de rotation du mécanisme de direction est découpée en différentes zones, et en ce que la position angulaire de ce mécanisme de direction dans une desdites zones modifie les conditions d'activation et de désactivation dudit signal de consommation d'énergie.

Selon une caractéristique de la présente invention, les conditions d'activation et de désactivation du signal de consommation, d'énergie sont modifiées selon la zone d'appartenance de la position angulaire du volant au moment de la transition entre un état mobile et un état stationnaire du véhicule, ou de la transition entre un état stationnaire et un état mobile du véhicule.

Afin de déterminer la mobilité du véhicule, on mesure la distance totale parcourue pendant un temps déterminé, le véhicule étant jugé dans un état stationnaire lorsque cette distance totale, est inférieure à un seuil déterminé.

Selon une caractéristique de la présente invention, la plage de rotation du mécanisme de direction est délimitée de part et d'autre par des butées, la valeur de ces butées étant actualisée selon les valeurs angulaires du mécanisme de direction rencontrées. Cette plage de rotation est découpée en trois zones, une première zone non critique s'étendant entre le point milieu et un angle critique, une deuxième zone s'étendant entre cet angle critique et un seuil de désactivation, de valeur absolue plus grande que celle de l'angle critique, et une troisième zone s'étendant entre ce seuil de désactivation et une butée de valeur absolue plus grande que celle du seuil de désactivation, une symétrie étant respectée de part et d'autre du point milieu.

L'activation et la désactivation du signal de consommation d'énergie sont alors fortement modifiées par la présence dans telle ou telle zone. La présente du mécanisme de direction dans la troisième zone provoque l'activation du signal de consommation d'énergie, si aucune inversion du sens de rotation du mécanisme de direction n'a provoqué préalablement un besoin d'énergie moindre. Par contre, lorsque le mécanisme de direction est présent dans la première ou la deuxième zone, l'activation et la désactivation du signal de consommation d'énergie dépendent de l'état du véhicule stationnaire ou mobile.

A titre d'exemple, l'activation du signal de consommation d'énergie, lorsque le véhicule est dans un état mobile, dépend soit de la vitesse de rotation du mécanisme de direction, soit de la vitesse du véhicule et de la position relative du mécanisme de direction par rapport à la butée la plus proche. L'activation dudit signal de consommation d'énergie, lorsque le véhicule est dans un état stationnaire, dépend du degré de braquage des roues quand le mécanisme de direction est immobile, et du changement de sens de rotation du mécanisme de direction quand ce mécanisme de direction est immobile.

La désactivation du signal de consommation d'énergie, lorsque le véhicule est dans un état stationnaire, est opérée lorsque le sens de rotation du mécanisme de direction a été inversé et que la position angulaire de ce mécanisme de direction présente une valeur supérieure à un seuil prédéterminé. Lorsque le véhicule est dans un état mobile, la désactivation est opérée lorsque le véhicule roule depuis un temps suffisant avec un mécanisme de direction immobile, ou lorsque le véhicule a une vitesse suffisante avec un mécanisme de direction s'éloignant rapidement de la butée la plus proche.

Selon une caractéristique de la présente invention, la position angulaire du mécanisme de direction est une valeur angulaire du volant par rapport à un angle de référence initialisé selon la situation antérieure du véhicule, deux valeurs successives de l'angle volant permettant de calculer la vitesse angulaire du volant.

D'autres caractéristiques et avantages de l'invention apparaîtront à la lecture de la description détaillée qui suit pour la compréhension de laquelle on se reportera aux dessins annexés dans lesquels :
- la figure 1 est un schéma bloc représentatif de l'algorithme d'activation du signal de consommation d'énergie dans une position particulière du volant selon l'invention,
- la figure 2 est un schéma bloc représentatif de l'algorithme d'activation du signal de consommation d'énergie dans une position particulière du volant selon l'invention, et lorsque le véhicule est dans un état mobile,
- la figure 3 est un schéma bloc représentatif de l'algorithme d'activation du signal de consommation d'énergie dans une position particulière du volant selon l'invention, et lorsque le véhicule est dans un état stationnaire,
- la figure. 4 est une vue schématique du système de régulation selon un premier mode de réalisation de l'invention,
- la figure 5 est une vue schématique du système de régulation selon un deuxième mode de réalisation de l'invention,
- la figure 6 est une représentation schématique de la répartition en différentes zones de la plage de rotation du volant.

Dans la description qui va suivre, l'activation et la désactivation du signal de consommation d'énergie généré par le moyen d'assistance de direction pour accroître l'alimentation du moteur thermique sera désigné par les termes correspondants d'activation et de désactivation du PDA.

Dans le but de mettre en avant une transition entre un mode arrêté et un mode roulant du véhicule d'une part et une distinction selon la zone de détection de l'angle volant d'autre part, l'acquisition préalable de deux variables est nécessaire

D'une part, la vitesse odométrie est une information représentative du cumul de la distance parcourue par le véhicule. La valeur de la distance parcourue précédente de la valeur courante est mémorisée à la même récurrence que l'ensemble de la stratégie afin qu'une augmentation de la distance parcourue ne soit traité qu'une seule fois. Suite à cette information, le véhicule est déclaré immobile si le cumul de la distance parcourue reste inchangé pendant un temps déterminé.

D'autre part, l'angle volant est mesuré, puis formaté afin de pouvoir être utilisé par la suite dans la stratégie. Les valeurs d'angle volant évoluent d'une butée gauche à une butée droite, les valeurs invalides et particulièrement les valeurs initiales étant filtrées. La valeur de l'angle précédente de la valeur courante est mémorisée à la même récurrence que la valeur courante afin de ne pas générer de bruit de calcul sur l'information représentative de la vitesse angulaire du volant. Cette dernière information est calculée par différence - entre les valeurs courante et précédente de l'angle volant. Les déplacements du volant sont mesurés à partir d'un angle de référence, réinitialisé dès que la puissance absorbée par la direction assistée devient suffisamment faible.

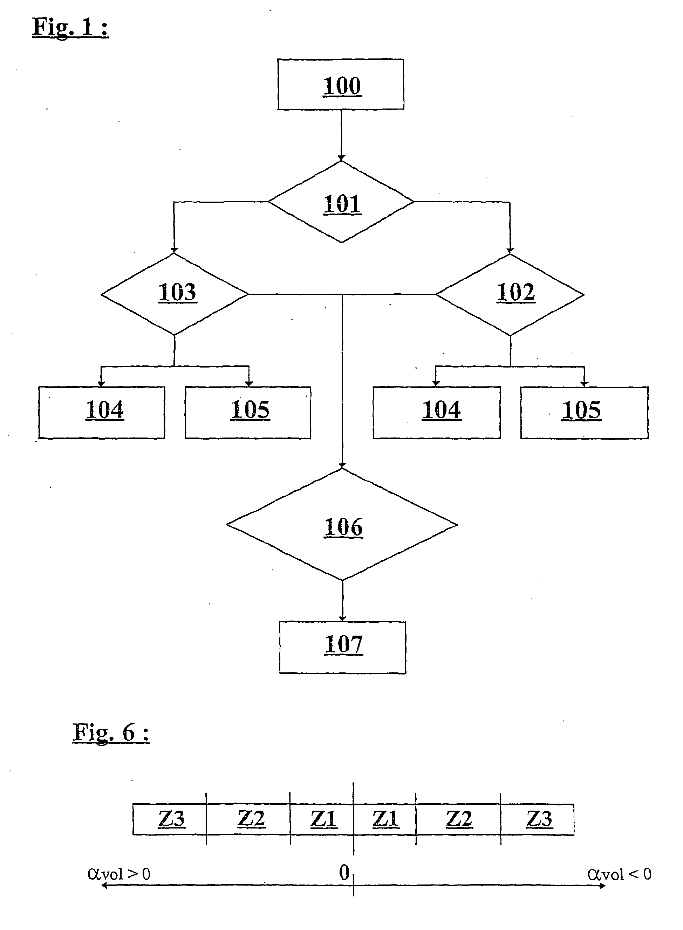

Les plages de rotation du volant de part et d'autre du point milieu (valeur d'angle de rotation nulle) sont divisées en trois zones, et représentées figure 6.

Une première zone, nommée Z1, est délimitée de part et d'autre du point milieu par une valeur représentative d'un angle critique. Tant que la valeur absolue de l'angle volant est inférieure à celle de l'angle critique, la situation est assimilée à une zone non critique. Une deuxième valeur, appelé seuil de désactivation, de valeur absolue plus grande que l'angle critique, délimite une deuxième zone, dite critique et nommée Z2, qui s'étend symétriquement par rapport au point milieu, aussi bien pour un angle négatif, représentatif d'un volant tourné à droite, que pour un angle positif représentatif d'un volant tourné à gauche. Enfin, une troisième zone, nommée Z3, représente la zone extrême de rotation du volant, où l'absorption de couple est maximum, aussi bien pour un angle négatif que positif. Cette zone est délimité par la valeur de butée reconnue et le seuil de désactivation. Afin de s'affranchir de la connaissance exacte des butées gauche et droite, un algorithme d'apprentissage des butées est utilisé. Le principe est donc d'affecter aux valeurs des butées l'angle le plus important rencontré. Les valeurs des butées sont donc dans la pratique réactualisées chaque fois que la valeur mesurée dépasse les butées par défaut pendant un certain temps, ce délai permettant un filtrage des valeurs extrêmes.

Ces différentes zones vont être utilisées pour modifier les conditions de passage du PDA entre un état inactif et un état actif.

La zone Z3 est la zone proche de la butée où l'effort nécessaire pour faire tourner les roues est très important. Le PDA y est donc activé mais le cas de l'inversion du sens de rotation du volant, dans le cas d'un retour vers le centre, doit être traité différemment car cette inversion provoque une baisse de pression. La désactivation du PDA est alors à prendre en compte lorsque le volant est tourné suffisamment dans la direction opposé à la butée correspondante à la zone Z3, et ce dans deux situations distinctes, d'une part quand le véhicule est roulant, d'autre part quand le véhicule est arrêté avec les roues en butée.

L'algorithme d'activation du PDA lorsque, l'angle volant est en zone Z3 est représenté figure 1. La situation initiale est donc une présence 100 du volant dans une plage de rotation correspondante à la zone Z3. Un premier test 101 est alors effectué afin de déterminer si la position angulaire du volant est positif, c'est à dire si le volant est situé à gauche du point milieu. Dans le cas d'une réponse négative (le volant est situé à droite du point milieu) à ce premier test 101, un deuxième test 102 est effectué afin de déterminer si le sens de rotation actuel du volant est orienté vers la butée droite, afin donc de connaître la position du volant par rapport au point milieu. Si le volant s'en éloigne, le PDA est activé 104 et l'indice d'inversion du volant est rems à zéro 105. Si il y a une inversion de sens, un troisième test 106 est opéré. Parallèlement, dans le cas d'une réponse positive (le volant est situé à gauche du point milieu) à ce premier test 101, un deuxième test parallèle 103 est effectué afin de déterminer si le sens de rotation actuel du volant est orienté vers la gauche, afin donc de savoir si une inversion de sens de rotation du volant a lieu. Si il n'y a pas d'inversion de sens, le PDA est activé 104 et l'indice d'inversion du volant est remis à zéro 105. Si il y a une inversion de, sens, un troisième test 106 est opéré.

Ce troisième test 106 aboutit à une désactivation 107 du PDA dans le cas où, simultanément à l'inversion du sens de rotation du volant, le volant est tourné suffisamment dans la direction opposée à la butée, c'est à dire que la valseur absolue de l'angle volant est inférieure à un seuil prédéterminé de désactivation, le véhicule étant en mouvement ou arrêté avec les roues en butée. La désactivation 107 du PDA s'accompagne à titre d'exemple d'une réinitialisation de l'angle de référence, une initialisation de la position du volant en zone 22, une remise à zéro de l'indice d'inversion du volant.

Contrairement à la zone Z3 où le PDA doit être en général activé, les zones dites non critique Z1 et critique Z2 sont plus difficile à gérer. En effet, la vitesse de rotation du volant, qui influence la demande de pression de l'assistance et, par conséquent, le couple demandé au moteur thermique, est à prendre en compte différemment selon que le véhicule soit à l'arrêt ou en roulage.

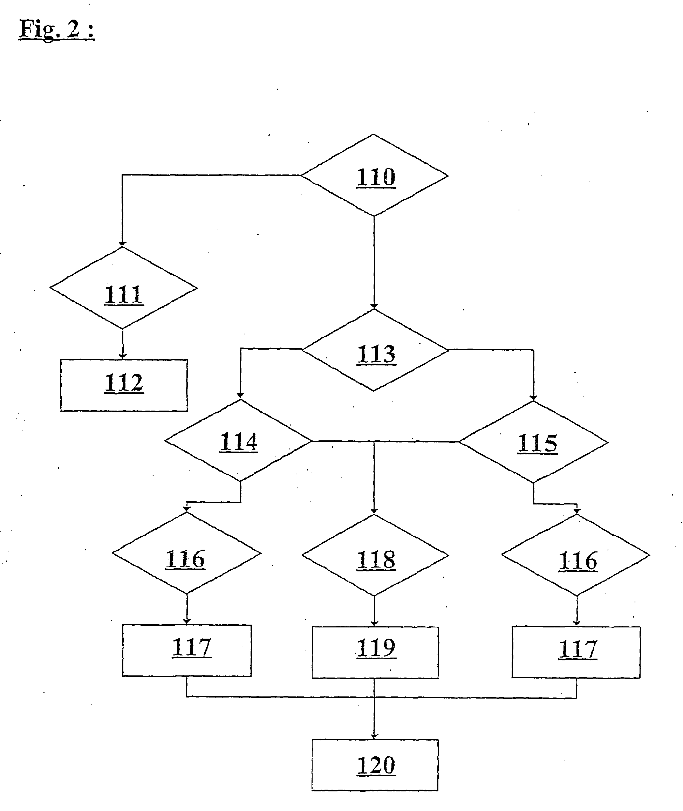

L'algorithme d'activation du PDA lorsque l'angle volant est hors zone Z3, et lorsque le véhicule est en roulage, est représenté figure 2. Dans cette configuration, un premier bloc-test 110 permet de déterminer si le volant se trouve dans une position centrale. On procède dans ce cas à l'activation 112 du PDA, à condition que la vitesse de rotation du volant soit supérieure à un seuil correspondant prédéterminé, lors d'un passage dans un deuxième bloc-test 111. Dans le cas contraire, où le volant ne se trouve pas dans une position centrale, le déclenchement du PDA est fonction de la vitesse du véhicule et de la position relative par rapport à la butée (rapprochement ou éloignement), car l'effet du rappel du volant crée par les roues dépend de la vitesse du véhicule. Un troisième bloc-test 113 détermine tout d'abord si le volant est dans une position à gauche ou à droite du volant.

Un troisième bloc-test 113 détermine tout d'abord si l'angle de rotation est positif, c'est à dire si le volant est situé à gauche du point milieu. Dans le cas d'une réponse négative (le volant est situé à droite du point milieu) à ce troisième bloc-test 113, un quatrième bloc-test 115 détermine si le sens de rotation actuel du volant est orienté vers la droite; afin donc de savoir si le volant se rapproche de la butée droite. Parallèlement, dans le cas d'une réponse positive (le volant est situé à gauche du point milieu) au troisième bloc-test 113, un quatrième bloc-test parallèle 114 détermine si le sens de rotation factuel du volant est orienté vers la gauche, afin donc de savoir si le volant se rapproche de la butée gauche. Dans les cas d'un rapprochement du volant vers les butées gauche ou droite, l'algorithme détermine par un cinquième bloc-test 116 si la valeur absolue de la vitesse de rotation du volant est supérieure à une valeur théorique interpolée en fonction de la vitesse du véhicule. Dans l'affirmative, ce qui représente un mouvement violent du volant vers l'extérieur et nécessite donc une assistance de direction, le PDA est activé 120, après que l'information d'un mouvement du volant vers les butées ait été gardée en mémoire 117. Dans les cas d'un rapprochement du volant vers le centre, l'algorithme détermine par un sixième bloc-test 118 si la valeur absolue de la vitesse de rotation du volant est supérieure à une valeur théorique interpolée en fonction de la vitesse du véhicule. Dans l'affirmative, ce qui représente un retour violent du volant vers l'intérieur et nécessite donc une assistance de direction, le PDA est activé 120, après que l'information d'un mouvement du volant vers le centre ait été gardée en mémoire 119.

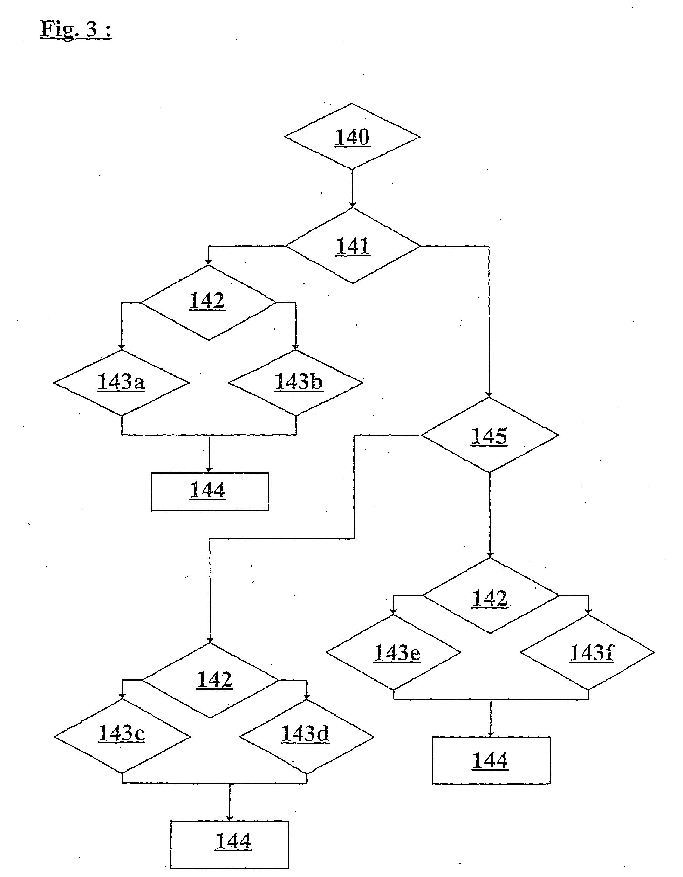

Dans le cas d'un véhicule à l'arrêt, l'algorithme d'activation du PDA, lorsque l'angle volant est hors zone Z3, est représenté figure 3. Dans cette configuration, un premier bloc comparatif 140 permet de déterminer si le PDA est déjà activé. Dans le cas contraire, un deuxième bloc comparatif 141 permet de déterminer la mobilité du volant. Si une immobilité du volant est constatée, un troisième bloc comparatif 142 indique si la position angulaire du volant correspond à la zone Z1 ou par opposition, puisque la configuration de départ impose un angle volant hors zoné Z3, à la zone Z2. Un quatrième bloc comparatif 143a, respectivement 143b, détermine alors si l'angle volant présente un écart angulaire supérieur à une valeur seuil, déterminée en fonction de la présence du volant dans la zone Z1, respectivement Z2. Dans le cas d'un angle supérieur, représentatif d'un arrêt du véhicule avec des roues braquées fortement au moment de cet arrêt, il est procédé à une activation 144 du PDA. En sortie du deuxième bloc comparatif 141, si le volant est détermine mobile, un cinquième bloc comparatif 145 permet de déterminer si le volant continue à être tourné dans le même sens. A titre d'exemple, lorsque l'on vient de désactiver le PDA en inversant le sens de rotation du volant et que ce volant continue à être tourné dans ce même sens, le PDA sera réactivé. En effet, la direction assistée sera alors encore en contrainte et le seuil de réactivation plus faible. Les deux types de réponse au cinquième bloc comparatif 145 aboutissent donc à des structures logiques similaires à celle évoqué plus haut dans le cas d'une immobilité constatée du volant, mais avec leur seuil 143c à 143f propre, dépendant du sens de rotation du volant.

Lorsque la sollicitation sur la direction ne nécessite plus l'activation du PDA, une stratégie de désactivation doit être mise en place, cette stratégie ne s'appliquant que lorsque le PDA est déjà activé. De même que pour la stratégie d'activation précédemment décrite, une distinction est à opérer concernant l'état du véhicule, en roulage ou non.

Dans les deux cas, le PDA n'est jamais désactivé si le volant est dans la zoné Z3. Lorsque le véhicule est à l'arrêt, dans des positions du volant correspondant aux zones Z1 ou Z2, la désactivation du PDA a lieu si d'une part il y a eu inversion du sens de rotation du volant, et si d'autre part l'angle volant présente un écart angulaire supérieur à une valeur seuil, ce seuil étant différent selon la position des roues par rapport aux butées lors de l'arrêt.

Lorsque le véhicule est en roulage, dans des positions du volant correspondant aux zones Z1 ou Z2, la désactivation du PDA a lieu dans les cas suivants : d'une part lorsque le véhicule roule depuis un temps suffisante avec un volant immobile, et d'autre part lorsque le véhicule a une vitesse suffisante avec un volant s'éloignant rapidement de la butée.

Le découpage en différentes zones de la plage de rotation du volant influe également sur l'initialisation des valeurs lors d'un arrêt du véhicule. Si, lors de cet arrêt, l'angle volant est situé dans la zone non critique Z1, toutes les variables de la stratégie sont initialisées à leur valeur neutre, sauf les butées volant. Si l'arrêt a lieu avec un angle volant situé dans une des zones Z2 ou Z3, le fait que le véhicule se soit arrêté avec le volant fortement braqué est mémorisé. Dans tous les cas, l'angle de référence est réactualisé à l'angle courant.

Comme vu précédemment, l'angle de référence permet de calculer l'écart par rapport à l'angle actuel et de connaître ainsi la rotation du volant depuis sa dernière mise à jour. Un angle de référence est mémorisé chaque fois que la puissance absorbée par la direction assistée devient suffisamment faible, en particulier en cas de détection d'inversion où, dans tous les cas, la pression de l'assistance diminue suffisamment, ainsi qu'en cas de passage du volant de la zone Z1 à la zone Z2, la référence devant être initialisée afin de pouvoir mesurer l'écart par rapport à cet angle dans la zone dite critique Z2. De même, le cas d'immobilité du volant et le cas de désactivation de ce PDA lorsque le véhicule est à l'arrêt donnent lieu à une mémorisation de la position de l'angle volant afin d'être prêt pour le traitement de l'activation ou non du PDA. Pour cette même raison, un angle de référence est initialisé lors du passage du véhicule de l'état roulant à l'état d'arrêt.

Un des inconvénients des solutions antérieures est l'absence de prise en compte du passage du véhicule d'un état roulant à un état stationnaire. Cette transition, impactant l'activation ou la désactivation du PDA, est traitée différemment selon la zone dans laquelle se trouve le volant au moment de l'arrêt. Dans le cas ou l'on se trouve en zone Z2 ou Z3, on devra considérer le volant en butée et ne pas modifier à ce moment l'état du PDA. Celui ci sera géré par les algorithmes décrits ci dessus. Dans le cas d'une situation en zone Z1, le PDA pourra alors être désactivé, la pression d'assistance n'étant pas très important.

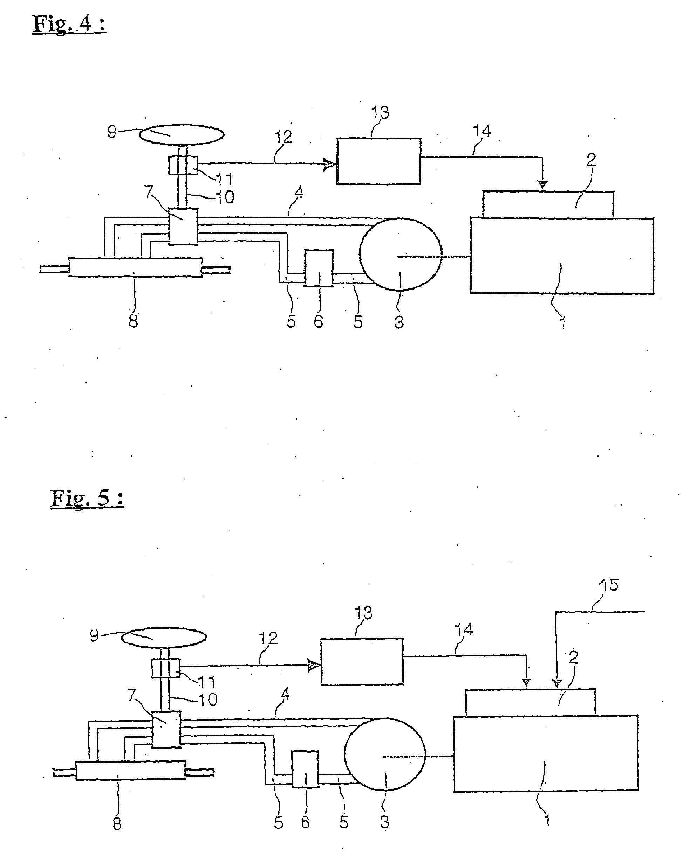

Comme on peut le voir sur la figure 4, un véhicule automobile comprend un groupe moto-propulseur 1 commandé par l'unité électronique 2 telle qu'un calculateur de contrôle. Le groupe moto-propulseur 1 entraîne une pompe hydraulique 3 de direction assistée équipée de tuyaux de sortie haute pression 4 et de tuyaux d'entrée basse pression 5. Sur les tuyaux de sortie basse pression est prévu un réservoir 6 de liquide hydraulique. Les tuyaux 4 et 5 passent par une valve 7 et aboutissent à une crémaillère de direction 8 dont ils assistent le mouvement par l'intermédiaire d'un actionneur hydraulique, non représenté disposé dans la crémaillère 8. La valve 7 est commandée par un volant de direction 9, par l'intermédiaire d'une colonne de direction. 10 sur lequel est disposé un capteur d'angle 11. Le capteur d'angle 11 envoie sur un câble de liaison 12 un signal d'angle du volant à un calculateur 13 de contrôle de trajectoire, qui traite ce signal avec les informations qu'il détient sur la vitesse du véhicule et l'odométrie fine. Le calculateur 13 émet alors, en sortie sur un câble de liaison 14, aboutissant à l'unité électronique 2, un signal pressostat équivalent élaboré selon l'algorithme illustré sur la figure 4. Dans cette variante, on voit donc que l'élaboration du signal pressostat équivalent à partir du signal d'angle volant, de la vitesse du véhicule et de l'odométrie fine est effectuée par le calculateur de contrôle de trajectoire.

Dans une variante non représentée, le signal d'angle volant est envoyé au calculateur de contrôle de trajectoire qui le transmet, simultanément à des informations qu'il détient sur la vitesse du véhicule et l'odométrie fine, à l'unité électronique par l'intermédiaire d'un bus de communication. Ces différents signaux peuvent être envoyés sur ce bus sous une forme brute ou légèrement traitée. L'unité électronique de commande du moteur récupère ces informations pour élaborer le signal pressostat équivalent.

La variante illustrée sur la figure 5 est proche dé la précédente, à ceci près que le calculateur 13 de contrôle de trajectoire transmet à l'unité électronique 2 le signal d'angle volant et que les informations relatives à la vitesse du véhicule et à l'odométrie fine sont fournies par d'autres calculateurs via un bus de communication 15. L'unité électronique 2 élabore le signal pressostat équivalent et commande le régime de rotation du moteur en fonction du signal pressostat équivalent.

Dans tous les cas, les signaux peuvent transiter entre les différents éléments, soit par des liaisons analogiques soit par un bus numérique, soit par toute autre liaison permettant la transmission d'informations.

L'invention n'est nullement limitée aux modes de réalisation décrits et illustrés qui n'ont été donnés qu'à titre d'exemple, mais uniquement par les revendications suivantes.

## Revendications

1. Procédé de régulation d'un moteur thermique (1) de véhicule en régime ralenti, ledit véhicule étant pourvu d'un moyen d'assistance (3) du mécanisme de direction (8) dans le quel on génère un signal de consommation d'énergie par le moyen d'assistance de direction (3) à partir d'un signal provenant d'un capteur angulaire (11) du mécanisme de direction (3), pour accroître l'alimentation du moteur thermique (6) **caractérisé en ce que** la plage de rotation du mécanisme de direction (8) est découpée en différentes zones, et **en ce que** la position angulaire de ce mécanisme de direction (8) dans une desdites zones modifie les conditions à d'activation et de désactivationdudit signal de consommation d'énergie.

2. Procédé de régulation selon la revendication 1, **caractérisé en ce que** les conditions d'activation et de désactivation du signal de consommation d'énergie sont modifiées selon la zone d'appartenance de la position angulaire du volant au moment de la transition entre un état mobile et un état stationnaire du véhicule, ou de la transition entre un état stationnaire et un état mobile du véhicule.

3. Procédé de régulation selon la revendication 2, **caractérisé en ce qu'**on mesure la distance totale parcourue pendant un temps détermine, le véhicule étant jugé dans un état stationnaire lorsque cette distance totale est inférieure à un seuil déterminé.

4. Procédé de régulation selon l'une des revendications précédentes, **caractérisé en ce que** la plage de rotation du mécanisme de direction est délimitée de part et d'autre par des butées, la valeur de ces butées étant actualisée selon les valeurs angulaires du mécanisme de direction rencontrées.

5. Procédé de régulation selon l'une des revendications précédentes, **caractérisé en ce que** la plage de rotation du mécanisme de direction est découpée en trois zones, une première zone non critique s'étendant entre le point milieu et un angle critique, une deuxième zone s'étendant entre cet angle critique et un seuil de désactivation, de valeur absolue plus grande que celle de l'angle critique, et une troisième zone s'étendant entre ce seuil de désactivation et une butée de valeur absolue plus grande que celle du seuil de désactivation, une symétrie étant respectée de part et d'autre du point milieu.

6. Procédé de régulation selon l'une des revendications précédentes, **caractérisé en ce que** la présence du mécanisme de direction dans la troisième zone provoque l'activation du signal de consommation d'énergie, si aucune inversion du sens de rotation du mécanisme de direction n'a provoqué préalablement un besoin d'énergie moindre.

7. Procédé de régulation selon l'une des revendications précédente, **caractérisé en ce que** l'activation et la désactivation dudit signal de consommation d'énergie dépendent, lorsque le mécanisme de direction est présent dans la première ou la deuxième zone, de l'état du véhicule stationnaire ou mobile.

8. Procédé de régulation selon la revendication 7, **caractérisé en ce que** l'activation dudit signal de consommation d'énergie, lorsque le véhicule est dans un état mobile, dépend soit de la vitesse de rotation du mécanisme de direction, soit de la vitesse du véhicule et de la position relative du mécanisme de direction par rapport à la butée la plus proche.

9. Procédé de régulation selon la revendication 7, **caractérisé en ce que** l'activation dudit signal de consommation d'énergie, lorsque le véhicule est dans un état stationnaire, dépend du degré de braquage des roues quand le mécanisme de direction est immobile, et du changement de sens de rotation du mécanisme de direction quand ce mécanisme de direction est immobile.

10. Procédé de régulation selon la revendication 7, **caractérisé en ce que** la désactivation dudit signal de consommation d'énergie, lorsque le véhicule est dans un état stationnaire, est opérée lorsque le sens de rotation du mécanisme de direction a été inversé et que la position angulaire de ce mécanisme de direction présente une valeur supérieure à un seuil prédéterminé.

11. Procédé de régulation selon la revendication 7, **caractérisé en ce que** la désactivation dudit signal de consommation d'énergie, lorsque le véhicule est dans un état mobile, est opérée lorsque le véhicule roule depuis un temps suffisant avec un mécanisme de direction immobile, ou lorsque le véhicule a une vitesse suffisante avec un mécanisme de direction s'éloignant rapidement de la butée la plus proche.

12. Procédé de régulation selon l'une des revendications précédentes, **caractérisé en ce que** la position angulaire du mécanisme de direction est une valeur angulaire du volant par rapport à un angle de référence initialisé selon la situation antérieure du véhicule, deux valeurs successives de l'angle volant permettant de calculer la vitesse angulaire du volant.

## Claims

1. Control method for an internal combustion vehicle engine (1) at idle speed, the said vehicle being provided with a means of power assistance (3) of the steering mechanism (8) in which a power consumption signal is generated by the power steering means (3) using a signal coming from an angle sensor (11) of the steering mechanism (3), to increase the fuel supply of the internal combustion engine (1) **characterized in that** the range of rotation of the steering mechanism (8) is divided into various zones, and **in that** the angular position of this steering mechanism (8) in one of the said zones changes the activation and deactivation conditions of the said power consumption signal.

2. Control method according to Claim 1, **characterized in that** the activation and deactivation conditions of the power consumption signal are changed according to the zone in which the angular position of the steering wheel is located at the moment of the transition from a moving state to a stationary state of the vehicle, or the transition from a stationary state to a moving state of the vehicle.

3. Control method according to Claim 2, **characterized in that** the total distance travelled during a set time is measured, the vehicle being judged to be in a stationary state when this total distance is less than a set limit.

4. Control method according to one of the preceding claims, **characterized in that** the range of rotation of the steering mechanism is defined on either side by stops, the value of these stops being updated according to the steering mechanism angular values found.

5. Control method according to one of the preceding claims, **characterized in that** the range of rotation of the steering mechanism is divided into three zones, a first noncritical zone lying between the mid-point and a critical angle, a second zone lying between this critical angle and a deactivation limit, of absolute value greater than that of the critical angle, and a third zone lying between this deactivation limit and a stop of absolute value greater than that of the deactivation limit, a symmetry being maintained on either side of the mid-point.

6. Control method according to one of the preceding claims, **characterized in that** the positioning of the steering mechanism in the third zone causes the activation of the power consumption signal, if no reversal of the direction of rotation of the steering mechanism has previously called for a lower power requirement.

7. Control method according to one of the preceding claims, **characterized in that** the activation and the deactivation of the said power consumption signal depend, when the steering mechanism is positioned in the first or the second zone, on the stationary or moving state of the vehicle.

8. Control method according to Claim 7, **characterized in that** the activation of the said power consumption signal, when the vehicle is in a moving state, depends on either the speed of rotation of the steering mechanism, or the speed of the vehicle and the relative position of the steering mechanism in relation to the nearest stop.

9. Control method according to Claim 7, **characterized in that** the activation of the said power consumption signal, when the vehicle is in a stationary state, depends on the turning angle of the wheels when the steering mechanism is immobile, and the change of direction of rotation of the steering mechanism when this steering mechanism is immobile.

10. Control method according to Claim 7, **characterized in that** the deactivation of the said power consumption signal, when the vehicle is in a stationary state, is carried out when the direction of rotation of the steering mechanism has been reversed and the angular position of this steering mechanism has a value greater than a preset limit.

11. Control method according to Claim 7, **characterized in that** the deactivation of the said power consumption signal, when the vehicle is in a moving state, is carried out when the vehicle has been travelling for a sufficient time with an immobile steering mechanism, or when the vehicle has a sufficient speed with a steering mechanism moving rapidly away from the nearest stop.

12. Control method according to one of the preceding claims, **characterized in that** the angular position of the steering mechanism is an angular value of the steering wheel compared with a reference angle set according to the previous condition of the vehicle, two successive values of the steering wheel angle making it possible to calculate the angular speed of the steering wheel.

## Patentansprüche

1. Verfahren zum Regulieren einer Fahrzeug-Brennkraftmaschine (1) im Leerlauf, wobei das Fahrzeug mit einem Lenkmechanismus-Unterstützungsmittel (3) versehen ist, in dem ein Signal für die von dem Lenkunterstützungsmittel (3) verbrauchte Energie anhand eines Signals erzeugt wird, das von einem Winkelsensor (11) des Lenkmechanismus (3) stammt, um die Versorgung der Brennkraftmaschine (1) zu erhöhen, **dadurch gekennzeichnet, dass** der Drehbereich des Lenkmechanismus (8) in verschiedene Zonen unterteilt ist und dass die Winkelposition dieses Lenkmechanismus (8) in einer der Zonen die Bedingungen für die Aktivierung und die Deaktivierung des Energieverbrauchsignals modifiziert.

2. Regulierungsverfahren nach Anspruch 1, **dadurch gekennzeichnet, dass** die Bedingungen für die Aktivierung und die Deaktivierung des Energieverbrauchsignals entsprechend der Zone, zu der die Winkelposition des Lenkrades zum Zeitpunkt des Übergangs zwischen einem bewegten Zustand und einem unbewegten Zustand des Fahrzeugs oder zum Zeitpunkt des Übergangs zwischen einem unbewegten Zustand und einem bewegten Zustand des Fahrzeugs gehört, modifiziert werden.

3. Regulierungsverfahren nach Anspruch 2, **dadurch gekennzeichnet, dass** die Gesamtstrecke, die während einer bestimmten Zeit durchfahren wird, gemessen wird, wobei das Fahrzeug als in einem unbewegten Zustand befindlich beurteilt wird, wenn diese Gesamtstrecke kleiner als ein bestimmter Schwellenwert ist.

4. Regulierungsverfahren nach einem der vorhergehenden Ansprüche, **dadurch gekennzeichnet, dass** der Drehbereich des Lenkmechanismus beiderseits durch Anschläge begrenzt ist, wobei die Werte dieser Anschläge entsprechend den angetroffenen Winkelwerten des Lenkmechanismus aktualisiert werden.

5. Regulierungsverfahren nach einem der vorhergehenden Ansprüche, **dadurch gekennzeichnet, dass** der Drehbereich des Lenkmechanismus in drei Zonen unterteilt ist, eine erste unkritische Zone, die sich zwischen dem Mittelpunkt und einem kritischen Winkel erstreckt, eine zweite Zone, die sich zwischen diesem kritischen Winkel und einem Deaktivierungsschwellenwert mit einem Absolutwert, der größer als jener des kritischen Winkels ist, erstreckt, und eine dritte Zone, die sich zwischen diesem Deaktivierungsschwellenwert und einem Anschlag mit einem Absolutwert, der größer als jener des Aktivierungsschwellenwertes ist, erstreckt, wobei eine Symmetrie beiderseits des Mittelpunkts eingehalten wird.

6. Regulierungsverfahren nach einem der vorhergehenden Ansprüche, **dadurch gekennzeichnet, dass** der Aufenthalt des Lenkmechanismus in der dritten Zone die Aktivierung des Energieverbrauchsignals hervorruft, falls keinerlei Drehrichtungsumkehr des Lenkmechanismus vorher einen geringeren Energiebedarf bewirkt hat.

7. Regulierungsverfahren nach einem der vorhergehenden Ansprüche, **dadurch gekennzeichnet, dass** die Aktivierung und die Deaktivierung des Energieverbrauchsignals dann, wenn sich der Lenkmechanismus in der ersten oder in der zweiten Zone befindet, vom unbewegten oder bewegten Zustand des Fahrzeugs abhängt.

8. Regulierungsverfahren nach Anspruch 7, **dadurch gekennzeichnet, dass** die Aktivierung des Energieverbrauchsignals dann, wenn das Fahrzeug in einem bewegten Zustand ist, von der Drehgeschwindigkeit des Lenkmechanismus oder von der Geschwindigkeit des Fahrzeugs und der relativen Position des Lenkmechanismus in Bezug auf den nächsten Anschlag abhängt.

9. Regulierungsverfahren nach Anspruch 7, **dadurch gekennzeichnet, dass** die Aktivierung des Energieverbrauchsignals dann, wenn das Fahrzeug in einem unbewegten Zustand ist, vom Einschlaggrad, wenn der Lenkmechanismus unbewegt ist, und von der Drehrichtungsänderung des Lenkmechanismus, wenn dieser Lenkmechanismus unbewegt ist, abhängt.

10. Regulierungsverfahren nach Anspruch 7, **dadurch gekennzeichnet, dass** die Deaktivierung des Energieverbrauchsignals dann, wenn das Fahrzeug in einem unbewegten Zustand ist, ausgeführt wird, wenn die Drehrichtung des Lenkmechanismus umgekehrt worden ist und wenn die Winkelposition dieses Lenkmechanismus einen Wert besitzt, der größer ist als ein vorgegebener Schwellenwert.

11. Regulierungsverfahren nach Anspruch 7, **dadurch gekennzeichnet, dass** die Deaktivierung des Energieverbrauchsignals dann, wenn das Fahrzeug in einem bewegten Zustand ist, ausgeführt wird, wenn das Fahrzeug seit einer ausreichenden Zeit mit unbewegtem Lenkmechanismus rollt oder wenn das Fahrzeug eine ausreichende Geschwindigkeit mit einem Lenkmechanismus, der sich schnell von dem nächsten Anschlag entfernt, besitzt.

12. Regulierungsverfahren nach einem der vorhergehenden Ansprüche, **dadurch gekennzeichnet, dass** die Winkelposition des Lenkmechanismus ein Winkelwert des Lenkrades in Bezug auf einen Referenzwinkel ist, der entsprechend der vorhergehenden Situation des Fahrzeugs initialisiert wird, wobei zwei aufeinander folgende Werte des Lenkwinkels ermöglichen, die Winkelgeschwindigkeit des Lenkrades zu berechnen.
